# EUROPEAN PATENT APPLICATION

(11) **EP 0 724 989 A1**
(43) Date of publication of application: **07.08.1996**
(21) Application number: 96300417.1
(22) Date of filing: 22.01.1996
(51) Int. Cl.: B60R 25/04, F16K 43/00

(54) **An anti-theft device for a motor vehicle**

(30) Priority: 31.01.1995 FR 9501096
(71) Applicant: LUCAS INDUSTRIES PUBLIC LIMITED COMPANY, Solihull, West Midlands B91 3TX (GB)
(72) Inventor: Legrande, Philippe, F-41350 Saint Gervais La Foret (FR)
(74) Representative: Thompson, George Michael

(57) **Abstract**

An anti-theft device for a motor vehicle includes an electromagnetic valve (1) which is screwed into a housing (2) and controls fuel flow along a pair of conduits (8, 9). A spring loaded closure device (15) is provided in a hole (12) in the housing and is held by a pin (18) in an open position. If the valve (1) is unscrewed the pin (18) is released and the closure device moves to the closed position in which it closes one of the conduits.

## Description

The present invention relates to an anti-theft device for a motor vehicle, and more particularly to such a device of the type including a fuel inlet conduit and a fuel outlet conduit, said conduits being formed in a housing wall, and a removable valve mounted on the housing between the conduits.

Such devices, intended to prevent the theft of the vehicles on which they are mounted, are already known. They are disposed in the fuel supply circuit to the engine, for example on the body of the injection pump. The valve is usually controlled by an electronic circuit controlled by the anti-theft system of the vehicle. In one of its configurations, that of operation, the valve permits the flow of fuel. In its other configuration, it blocks the flow of fuel between the inlet conduit and the outlet conduit.

This arrangement has one serious disadvantage. In effect, after having removed the valve, the thief often has only to replace it by a plug permitting the flow of fuel in order to allow the engine to operate.

The present invention aims to alleviate these disadvantages.

According to the invention an anti-theft device for motor vehicles, comprises a fuel inlet conduit and a fuel outlet conduit, the conduits being formed in a housing wall, and a removable valve mounted on the housing between the conduits, characterised by the fact that the anti theft device includes closure means arranged so as automatically to close at least one of said conduits when the valve is removed.

Thus, the fuel supply circuit is automatically closed as soon as anyone tries to remove the valve in order to inhibit the anti-theft device of the vehicle. The device is preferably designed in such a way that the closure is irreversible for a time sufficient to dissuade a thief from trying to remedy it.

In one particular embodiment of the invention, the closure means comprises a first hole pierced in the housing wall, and passing through at least one of the conduits, the first hole having a diameter greater than that of the conduit, a closure device adapted to move in the first hole between an open position and a closed position, and operating means arranged to hold the closure device in its open position as long as the valve is mounted on the housing, and to bring it into its closed position when the valve is removed.

In its closed position, the closure device is thus disposed obliquely to at least said one of the conduits, which it closes due to the respective diameters of the conduit and the hole in which the closure device moves.

More particularly, the operating means may include a recess formed in the closure device, a locking pin movable in a second hole pierced in the housing, the pin being arranged to engage in the recess to hold the closure device in the open position, one surface of the valve holding the pin in the recess, and means adapted to cause the retraction of the locking pin and to bring the closure device into its closed position when the valve is removed.

When the valve is removed, the surface which retains the locking pin moves away from the end of the latter, which then retracts and frees the closure device.

The means adapted to cause the retraction of the locking pin and to bring the closure device into the closed position may include resilient means disposed in the first hole to push the closure device in the direction of its closed position, the base of the recess and the end of the locking pin which is in contact with it, being shaped so as to cooperate so as to cause the automatic retraction of the locking pin under the action of the closure device when it ceases to be held by the surface of the valve.

In this embodiment, it is thus the closure device itself which, when the locking pin is freed, retracts the locking pin, due to the effect of the resilient means.

The recess may, in particular, form an annular throat in the closure device.

One particular embodiment of the invention will now be described, by way of non-limitative example, with reference to the accompanying schematic drawings, in which:
- figure 1 is a view in section of a device of the invention with the anti-theft valve in position on its support member;
- figure 2 is a view similar to figure 1 with the valve in the course of being removed; and
- figure 3 is a schematic view looking in the direction of the arrow III of Figure 1.

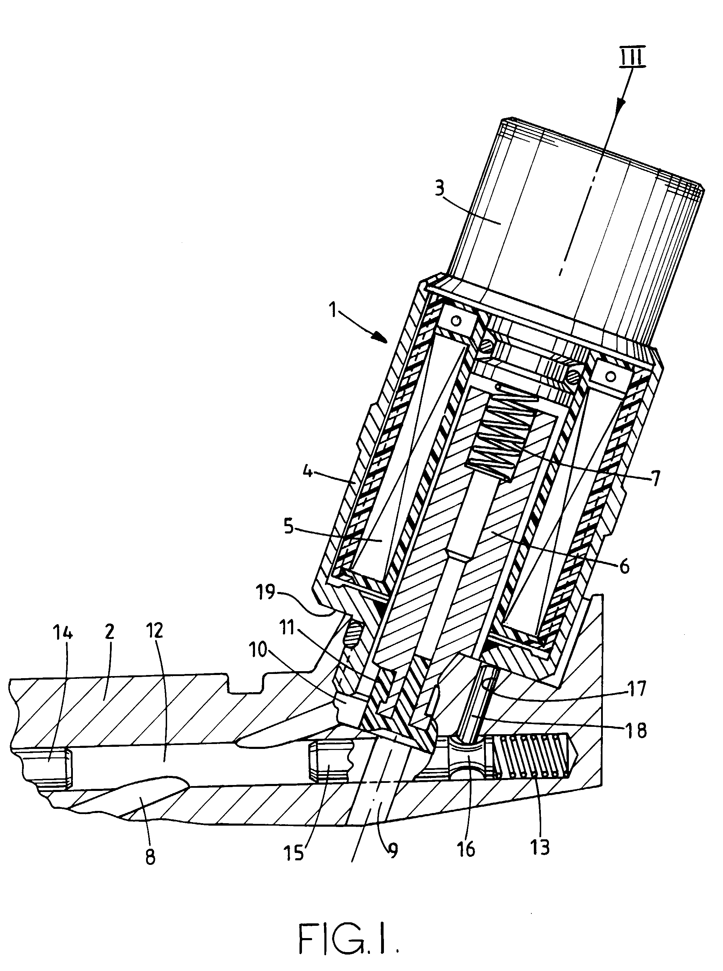

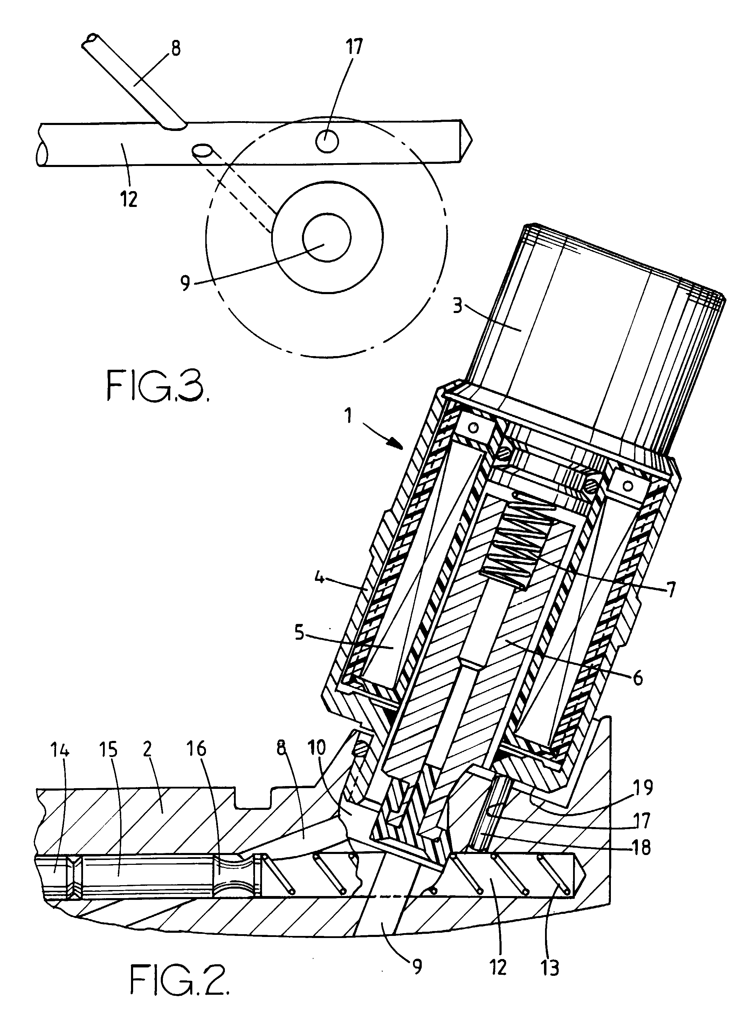

Figures 1 and 2 show an electromagnetically operable valve 1 mounted in screw threaded engagement with an injection pump housing 2 of an internal combustion engine, for example a Diesel engine. The valve 1 has an electronic control 3, itself controlled by the anti-theft system of the vehicle, and a body 4 containing the valve proper.

In the body 4 is disposed an electromagnetic coil 5, wound upon a former in which is a movable armature 6. A spring 7 biases the armature 6 in the direction of the housing 2, the armature being moved against the action of the spring when the coil 5 is supplied with electric current.

Two fuel conduits are pierced in the housing 2, namely a fuel inlet conduit 8 and a fuel outlet conduit 9, which both open into a chamber 10. The periphery of the opening of the conduit 9 into the chamber 10 forms a seat for engagement by a seating member 11 mounted on the armature 6. Thus, when the armature 6, under the action of the spring 7, is in its outward position as shown in Figure 1, the seating member 11 closes the conduit 9 to prevent the flow of fuel and this prevents the engine being started. It is only when the coil 5 is supplied with electric current 50 so that the armature 6 is retracted, that fuel can flow in the conduit. The assembly which has just been described thus constitutes an anti-theft system.

The problem is to ensure that it is not sufficient to unscrew the valve 1 and to replace it with any plug in order to permit the engine to be started without supplying electric current to the coil 5.

To this end, there is provided in the housing 2 a first cylindrical blind hole 12, at the closed end of which is disposed a compression spring 13 and which is closed at its open end by an abutment 14. The axis of the hole 12 intersects the axis of the conduit 8 and the diameter of this hole is greater than that of the conduit.

A shuttle 15, which, as will be seen hereafter, forms the closure device, is disposed in the hole 12 and is slidable towards the abutment 14 under the action of the spring 13. The shuttle 15 is formed, at its end adjacent the spring 13, with an annular groove 16 the base of which is substantially toroidal. The length of the shuttle 15 is such that, when it is brought to bear on the abutment 14 by the spring 13, it closes the conduit 8. It will be observed that a man skilled in the art has a certain latitude as regards the respective size and positioning of the conduit 8 and of the hole 12, the essential being that the shuttle 15 completely closes the conduit 8 when it is bearing on the abutment 14.

Moreover, a second hole 17 is pierced in the housing 2, this second hole opening both into the first hole 12 and at the exterior of the housing 2, at a location at which a surface 19 of the body 4 of the valve 1 comes to bear when the valve is fully screwed into the housing. A locking pin 18 is disposed in the second hole 17, its length being such that, when it bears on the surface 19 of the fully screwed in valve, its rounded end is engaged in the annular groove 16.

As a result, as long as the valve 1 is screwed into its normal operating position, the surface 19 holds the pin 18 engaged in the annular groove 16. When anyone tries to unscrew the valve, the spring 13 pushes the shuttle 15 axially and the contour of the groove 16 causes the locking pin 18 to be displaced axially out of the groove. The spring 13 then moves the shuttle 15 into engagement with the abutment 14, where it blocks the conduit 8, thus interrupting the supply of fuel thereby preventing the vehicle being started. It will be appreciated that once the valve has been unscrewed by an amount sufficient to release the shuttle 15, screwing the valve back into the housing will not cause the return movement of the shuttle. It is necessary to allow the engine to be started to extract the abutment 14 and move the shuttle against the action of the spring 13, and then screw the valve into the housing after the pin 18 has been moved outwardly out of the path of movement of the shuttle.

## Claims

1. An anti-theft device for motor vehicles, including a fuel inlet conduit (8) and a fuel outlet conduit (9), said conduits being formed in the wall of a housing (2), and a removable valve (1) mounted on said housing between said conduits, characterised by the fact that the anti-theft device includes closure means (12-18) arranged automatically to close at least one of said conduits when said valve is removed.

2. A device according to Claim 1, characterised in that said closure means includes a first hole (12) pierced in said wall, passing through at least one of said conduits and having a diameter greater than that of this conduit, a closure device (15) adapted to move in said first hole between an open position and a closed position, and operating means (16-18) arranged to hold the closure device in its open position as long as the valve is mounted on the housing, and to bring it into its closed position when the valve is removed.

3. A device according to Claim 2, characterised in that said operating means includes a recess (16) formed in the closure device, a locking pin (18) movable in a second hole (17) pierced in said housing, said pin being arranged to engage in said recess in order to hold the closure device in the open position, a surface (19) of the valve holding said pin in said recess (16), and means (13, 16,) adapted to cause said locking pin (18) to retract and to bring said closure device into its closed position when the valve is removed.

4. A device according to Claim 3, characterised in that said means adapted to cause the locking pin (18) to retract and to bring the closure device into the closed position includes resilient means (13) disposed in said first hole (12) to push the closure device in the direction of its closed position, the base of the recess (16) and the end of the locking pin (18) in contact therewith being shaped so as to cause retraction of the locking pin when released by the surface of the valve.

5. A device according to either of claims 3 and 4, characterised in that the recess is defined by an annular groove in the closure device (15).

6. A device according to Claim 1, characterised in that said closure means includes a closure device (15) movable from an open position to a closed position in which one of said conduits is closed, a locking pin (18) engageable with the closure device to retain the closure device in the open position, said locking pin (18) being held in the locking position when the valve (1) is mounted on the housing and being movable to an unlocking position to release the closure device (15) when the valve is removed from the housing.

7. A device according to Claim 6, characterised in that the closure device (15) must be moved from the closed to the open position before the locking pin (18) can be engaged therewith to retain the closure device in the open position.
